# EUROPÄISCHE PATENTANMELDUNG

(11) **EP 2 196 086 A1**
(43) Veröffentlichungstag der Anmeldung: **16.06.2010**
(21) Anmeldenummer: 08021602.1
(22) Anmeldetag: 12.12.2008
(51) Int. Cl.: A01K 29/00

(54) **Einrichtung zur Überwachung von Großtieren**

(71) Anmelder: MTK Messtechnik Hamburg (GmbH & Co.) KG, 21079 Hamburg (DE)
(72) Erfinder: Lutz, Carsten, 22359 Hamburg (DE); Menslin, Michael, 21680 Stade (DE)
(74) Vertreter: Müller Verweyen

(57) **Zusammenfassung**

Die Erfindung betrifft eine Einrichtung (1) zur Überwachung von Großtieren mit
-einer Sensoreinrichtung (2,3,4,5) zur Sensierung der aktuellen Herzfrequenz (F) und/oder der aktuellen Körpertemperatur (T) und/oder der aktuellen Haltung (P) und/oder der aktuellen Haut- oder Fellfeuchte (H), wobei
-eine Speichereinrichtung (11,12,13,14) vorgesehen ist, in der ein vorgegebener oberer Grenzwert der Herzfrequenz (FGO) und/oder der Körpertemperatur (TGO) und/oder der Haltung (PGO) und/oder der Haut- oder Fellfeuchte (HGO) abgelegt sind,
-eine Vergleichseinrichtung (21,22,23,24) vorgesehen ist, in der die aktuelle Herzfrequenz (F) mit dem vorgegebenen oberen Grenzwert der Herzfrequenz (FGO) und/oder die aktuelle Körpertemperatur (T) mit dem vorgegebenen oberen Grenzwert der Körpertemperatur (TGO) und/oder die aktuelle Haltung (P) mit dem vorgegebenen oberen Grenzwert der Haltung (PGO) und/oder die aktuelle Haut- oder Fellfeuchte (H) mit dem vorgegebenen oberen Grenzwert der Haut- oder Fellfeuchte (HGO) verglichen werden,
-und bei Sensierung von wenigstens zwei die oberen Grenzwerte (FGO,HGO,PGO,TGO) überschreitenden Messwerte (F,T,H,P) ein Signal an eine externe Warneinrichtung (40) übermittelbar ist.

## Beschreibung

Die Erfindung betrifft eine Einrichtung zur Überwachung von Großtieren mit einer Sensoreinrichtung zur Sensierung verschiedener gesundheitsbezogener Kenngrößen.

Großtiere, wie z.B. Pferde oder Rinder, stellen heute einen erheblichen Wert dar, so dass es von besonderer Bedeutung ist, Krankheiten frühzeitig zu erkennen und die Tiere im Falle von Krankheiten entsprechend zu überwachen. Insbesondere für Züchter ist es wichtig, die Tiere im Verlauf von Schwangerschaften zuverlässig zu überwachen und den Zeitpunkt der Geburt rechtzeitig zu erkennen, so dass entsprechende Betreuungsmaßnahmen vorgenommen werden können. Da die Beobachtung durch Personal kostenintensiv ist und dabei die Gefahr besteht, dass bei nicht rechtzeitiger Erkennung einer einsetzenden Geburt eine Hilfestellung durch den Menschen eventuell zu spät kommt, sind bereits Einrichtungen zur Beobachtung von Großtieren bekannt, welche verschiedene gesundheitsbezogene Kenngrößen kontinuierlich sensieren und bei Überschreitung eines vorgegebenen Grenzwertes einen Alarm auslösen.

Aus der DE 20 2006 010 000 U1 sind verschiedene Einrichtungen bekannt, welche aufgrund verschiedener Messwerte, wie der Herzfrequenz, der Lage des Großtieres, Verhaltensmuster, Hautfeuchtigkeit oder der Hauttemperatur, einen Alarm auslösen.

Es hat sich herausgestellt, dass in bestimmten Situationen, wie z.B. beim Wälzen des Tieres oder beim Hinlegen des Tieres in einen Pferdeapfel, ein Warnsignal ausgelöst wird, obwohl keine zu sensierende gesundheitskritische Situation für das Tier bestand.

Vor diesem Hintergrund liegt der Erfindung die Aufgabe zugrunde, eine Einrichtung zur Überwachung von Großtieren zu schaffen, die mit einer möglichst geringen Fehlerwahrscheinlichkeit den Benutzer über ein Warnsignal auf eine kritische Situation des Tieres aufmerksam macht.

Die Lösung der Aufgabe erfolgt durch eine Einrichtung mit den Merkmalen einer der Ansprüche 1 oder 13. Vorteilhafte Weiterbildungen der Erfindung sind in den Unteransprüchen angegeben.

Nach Anspruch 1 wird zur Lösung der Aufgabe eine Einrichtung zur Überwachung von Großtieren mit einer Sensoreinrichtung zur Sensierung der aktuellen Herzfrequenz und/oder der aktuellen Körpertemperatur und/oder der aktuellen Haltung und/oder der aktuellen Haut- oder Fellfeuchte vorgeschlagen, wobei eine Speichereinrichtung vorgesehen ist, in der vorgegebene obere Grenzwerte der Herzfrequenz und/oder der Körpertemperatur und/oder der Haltung und/oder der Haut- oder Fellfeuchte abgelegt sind, eine Vergleichseinrichtung vorgesehen ist, in der die aktuelle Herzfrequenz mit dem vorgegebenen oberen Grenzwert der Herzfrequenz und/oder die aktuelle Körpertemperatur mit dem vorgegebenen oberen Grenzwert der Körpertemperatur und/oder die aktuelle Haltung mit dem vorgegebenen oberen Grenzwert der Haltung und/oder die aktuelle Haut- oder Fellfeuchte mit dem vorgegebenen oberen Grenzwert der Haut- oder Fellfeuchte verglichen werden, und bei Sensierung von wenigstens zwei die oberen Grenzwerte überschreitenden Messwerte ein Signal an eine externe Warneinrichtung übermittelbar ist.

Der Grundgedanke der Erfindung besteht darin, das Warnsignal nur auszusenden, wenn zwei Grenzwerte überschritten werden. Im Vergleich zu der im Stand der Technik bekannten Lösung, bei der allein das Überschreiten eines Grenzwertes ausreicht, um ein Warnsignal auszulösen, wird nunmehr eine zweite Bedingung geschaffen, nämlich das Überschreiten mindestens eines weiteren Grenzwertes, wodurch die Wahrscheinlichkeit eines Fehlalarmes deutlich vermindert wird.

Ferner wird vorgeschlagen, dass in der Speichereinrichtung vorgegebene untere Grenzwerte der Herzfrequenz und/oder der Körpertemperatur und/oder der Haltung und/oder der Haut- oder Fellfeuchte abgelegt sind, und bei Sensierung von wenigstens zwei Messwerten, welche die unteren Grenzwerte unterschreiten oder die oberen Grenzwerte überschreiten, ein Signal an die externe Warneinrichtung übermittelbar ist. Durch die vorgeschlagenen unteren Grenzwerte wird in Verbindung mit den gemäß Anspruch 1 vorgeschlagenen oberen Grenzwerten ein Bereich geschaffen, welcher einen akzeptierten Bereich der Messwerte darstellt. Damit führt auch ein Unterschreiten eines unteren Grenzwertes in Verbindung mit dem Über- oder Unterschreiten eines weiteren Grenzwertes zur Auslösung des Warnsignals. Dies ist insbesondere bei der Sensierung der Haltung sinnvoll, welche ausgehend von der stehenden Haltung des Großtieres durch eine den unteren Grenzwert bildende negative Neigung (z.B. gegen den Uhrzeigersinn) und eine den oberen Grenzwert bildende positive Neigung (z.B. im Uhrzeigersinn) in einen Bereich eingeteilt ist, der keine kritische Haltung des Großtieres darstellt. Legt sich das Tier nun hin, so wird entweder der obere oder der untere Grenzwert über- oder unterschritten, und diese Bedingung unabhängig von der Richtung, in welche sich das Tier hinlegt, erfüllt, und bei Über- oder Unterschreiten eines weiteren Grenzwertes das Warnsignal entsprechend ausgelöst. Solche unteren Grenzwerte wären auch für die Temperaturmessung und die Herzfrequenz denkbar.

Eine weitere bevorzugte Ausführungsform der Erfindung besteht darin, dass die Einrichtung eine Eingabeeinrichtung zur Eingabe eines der Warneinrichtung zugeordneten Identifikationskennzeichens aufweist. Solche Identifikationskennzeichen bieten sich dann an, wenn das Signal verschiedenen Warneinrichtungen gleicher Art übermittelbar sein soll, wobei durch die Eingabe des Identifikationskennzeichens eine bestimmte Warneinrichtung ausgewählt wird.

Ferner kann die Einrichtung ein Mikrofon aufweisen und die von dem Mikrofon aufgenommene Geräuschkulisse an die Warneinrichtung übermittelbar sein. Der Nutzer der erfindungsgemäßen Einrichtung kann in diesem Fall zeitgleich die das Tier umgebende bzw. von diesem erzeugte Geräuschkulisse abhören, so dass er eine weitere Kontrollmöglichkeit hat, kritische von unkritischen Situationen zu unterscheiden.

Ferner wird vorgeschlagen, dass die von der Sensoreinrichtung sensierten Messwerte und/oder die von dem Mikrofon aufgenommene Geräuschkulisse aktiv von der Warneinrichtung abrufbar sind. Der Nutzer ist damit nicht darauf angewiesen, dass der Warneinrichtung zur Aktivierung der Verbindung erst ein Signal übermittelt wird, sondern kann die Verbindung selbst aktiv herstellen und die gewünschten Informationen abrufen bzw. das Tier und dessen Umgebung abhören.

Ferner wird vorgeschlagen, dass die Warneinrichtung ein Mobiltelefon ist. Die Signalübermittlung erfolgt dann durch ein der Einrichtung zugeordnetes GSM-Modul, wobei das Mobiltelefon bereits sämtliche notwendigen Funktionen, wie z.B. die Möglichkeit der Wiedergabe eines Warnsignals oder der Anzeige der Messwerte, aufweist.

Weiterhin wird vorgeschlagen, dass die Einrichtung eine Eingabeeinrichtung aufweist, über die die vorgegebenen Grenzwerte veränderbar sind. Dies ist insofern von Vorteil, wenn besondere Grenzwerte für die Gesundheit des Tieres von besonderer Bedeutung sind, welche dann individuell bevorzugt von einem Tierarzt eingestellt werden können.

Ferner wird vorgeschlagen, dass zur Sensierung der aktuellen Körpertemperatur eine in dem Körper des Großtieres positionierbare Temperaturmesssonde vorgesehen ist, und die von der Temperaturmesssonde sensierte aktuelle Körpertemperatur drahtlos an die Einrichtung übermittelbar ist. Durch die vorgeschlagene Verwendung einer in dem Körper des Großtieres positionierbaren Temperaturmesssonde kann die Körpertemperatur wesentlich genauer gemessen werden, während der Einfluss äußerer Parameter gleichzeitig verringert wird.

Der vorgegebene obere Grenzwert der Herzfrequenz sollte wenigstens 60 Schläge pro Minute betragen. Aus der vorgeschlagenen Herzfrequenz lässt sich mit hoher Wahrscheinlichkeit auf das Vorliegen eines kritischen Zustandes schließen, so dass dieser Wert auch fest eingespeichert werden kann.

Der vorgegebene obere Grenzwert der Haltung sollte +10 Grad und der vorgegebene untere Grenzwert -10 Grad in der Neigung abweichend von der Haltung des stehenden Großtieres betragen. Durch die vorgeschlagenen Grenzwerte kann sicher ausgeschlossen werden, dass bereits bei geringen Bewegungen des Tieres auf eine kritische Haltung des Tieres geschlossen wird. Vielmehr ist aufgrund der vorgeschlagenen Grenzwerte eine zuverlässige Aussage möglich, dass sich das Tier hinlegt oder zumindest eine einen gesundheitskritischen Zustand indizierende Haltung einnimmt.

Der vorgegebene obere Grenzwert der Haut- oder Fellfeuchte einer relativen Feuchte sollte 90 % und der vorgegebene obere Grenzwert der Körpertemperatur +40 Grad betragen, sofern diese fest in der Einrichtung gespeichert werden sollen.

Alternativ wird zur Lösung der gestellten Aufgabe eine Einrichtung zur Überwachung von Großtieren mit einer Sensoreinrichtung zur Sensierung der aktuellen Körpertemperatur des Großtieres vorgeschlagen, wobei die Sensoreinrichtung durch eine in dem Körper des Großtieres positionierbare Temperaturmesssonde gebildet ist, und eine sich außerhalb des Körpers des Großtieres befindliche Warneinrichtung vorgesehen ist, welche mit der Temperaturmesssonde in drahtloser Signalverbindung steht.

Der Vorteil der vorgeschlagenen Lösung ist darin zu sehen, dass die Körpertemperatur weitaus genauer und unabhängig von äußeren Parametern bestimmt werden kann, als dies mit der im Stand der Technik bekannten Messung der Hauttemperatur möglich ist. Die Temperaturmesssonde kann z.B. durch Verschlucken in den Körper des Großtieres eingebracht werden, wobei die Temperaturmesssonde dann nach einer Zeitspanne von 24-48 Stunden wieder ausgeschieden wird.

In diesem Fall kann der Temperaturmesssonde oder der Warneinrichtung eine Speichereinrichtung zugeordnet sein, in der ein vorgegebener oberer und/oder unterer Grenzwert der Körpertemperatur abgelegt ist, und der Warneinrichtung bei Sensierung einer aktuellen einen der Grenzwerte überschreitenden Körpertemperatur ein Warnsignal übermittelbar ist. Durch die vorgegebenen Grenzwerte, welche auch manuell einstellbar sein können, wird ein Bereich festgelegt, bei dessen Verlassen auf einen gesundheitskritischen Zustand des Tieres geschlossen werden kann. Die manuelle Einstellung kann durch einen Tierarzt oder eine sonstige fachkundige Person vorgenommen werden, während bei einer Festeinstellung ein oberer Grenzwert von +40 Grad gewählt werden sollte. Selbstverständlich kann der untere Grenzwert auch entfallen, sofern nur eine Überschreitung eines oberen Grenzwertes der Körpertemperatur relevant ist.

Nachfolgend wird die Erfindung anhand eines bevorzugten Ausführungsbeispieles näher erläutert. In den Figuren ist im Einzelnen dargestellt:
- Fig.1:: Pferd mit umgeschnallter Einrichtung zur Überwachung
- Fig.2:: Einrichtung zur Überwachung mit Warneinrichtung
- Fig.3:: Einrichtung zur Überwachung mit Signalaufbereitung

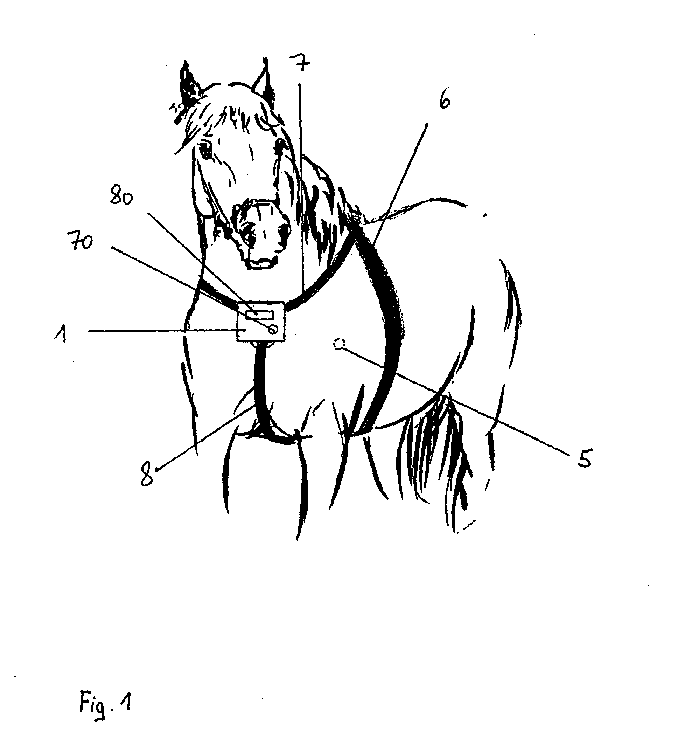

In Figur 1 ist ein Großtier, in diesem Fall ein Pferd, mit einer Einrichtung 1 zur Überwachung dargestellt. Großtiere im Sinne der vorliegenden Erfindung sind alle größeren Tiere, welche einen gewissen immateriellen oder materiellen Wert darstellen und in bestimmten Situationen medizinischer, psychologischer oder physischer Hilfe des Menschen bedürfen.

Die Einrichtung 1 ist über ein Gurtzeug bestehend aus einem Bauchgurt 6, einem Brustgurt 7 und einem zwischen den Beinen des Pferdes verlaufenden Verbindungsgurt 8 an der Brust des Pferdes gehalten. Die Einrichtung 1 selbst ist gebildet durch einen kleinen Kasten mit einer Eingabeeinrichtung 70 und einer Anzeigeeinrichtung 80.

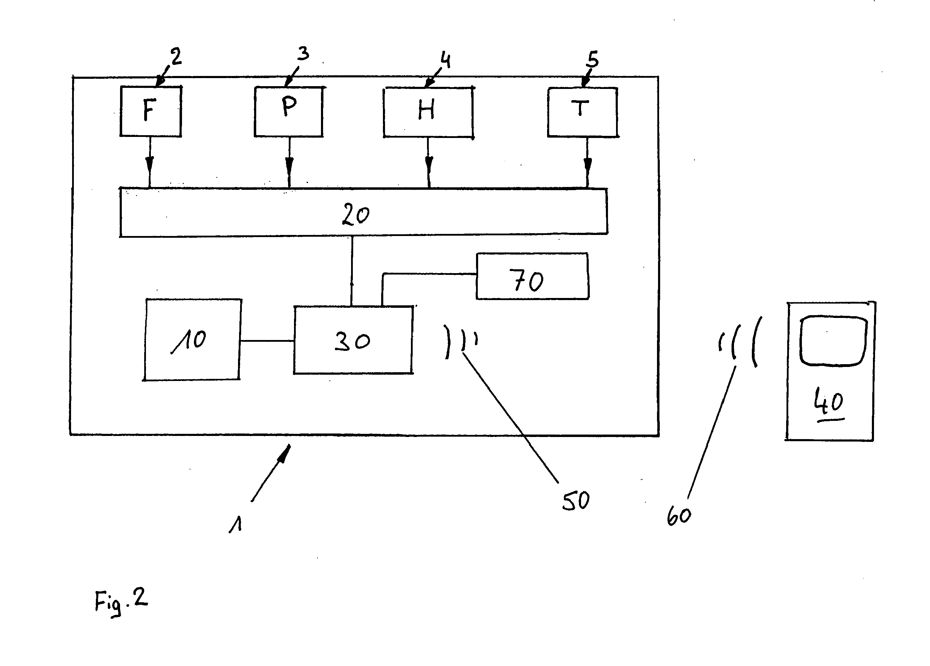

In Fig.2 ist die Einrichtung 1 mit den wesentlichen Baugruppen schematisch zu erkennen. Die Einrichtung 1 umfasst eine Sensoreinrichtung 2 zur Erfassung der aktuellen Herzfrequenz F, eine Sensoreinrichtung 3 zur Erfassung der aktuellen Haltung P des Pferdes, eine Sensoreinrichtung 4 zur Erfassung der Haut- oder Fellfeuchte H und eine Sensoreinrichtung 5 zur Erfassung der aktuellen Körpertemperatur T. Die Sensoreinrichtung 5 zur Erfassung der aktuellen Körpertemperatur ist durch eine Temperaturmesssonde gebildet, welche durch Verschlucken in dem Körper des Großtieres positioniert ist, wie auch in Fig.1 zu erkennen ist. Die übrigen Sensoreinrichtungen 2,3 und 4 können fest an der Einrichtung 1 angeordnet sein und an der Haut- oder Felloberfläche des Pferdes über entsprechende Kontakte anliegen.

Die von den Sensoreinrichtungen 2,3,4,5 ermittelten Messwerte werden einer Auswerteeinheit 20 zugeführt, welche die Signale, wie später noch erläutert wird, auswertet und daraus ein Signal bildet, welches zur Auslösung des Warnsignals an eine Übermittlungseinrichtung 30 übermittelt wird. Die Übermittlungseinrichtung 30 steht in drahtloser Signalverbindung mit einer externen Warneinrichtung 40, welche z.B. durch ein Mobiltelefon gebildet sein kann und bei Übermittlung eines Signals 50 ein Warnsignal, wie z.B. einen Klingelton, aussendet. Die Übermittlungseinrichtung 30 ist in diesem Fall mit einem im Stand der Technik weit verbreiteten GSM-Modul versehen. Weiterhin umfasst die Einrichtung 1 eine mit der Auswerteeinheit 20 und der Übermittlungseinrichtung 30 in Verbindung stehende Eingabeeinrichtung 70 und ein mit der Übermittlungseinrichtung 30 in Verbindung stehendes Mikrofon 10. Durch die Eingabeeinrichtung 70 kann ein Identifikationskennzeichen der Warneinrichtung 40, wie z.B. eine Mobilfunknummer, eingegeben werden, so dass das Warnsignal 50 einer beliebigen durch das Identifikationskennzeichen ausgewählten Warneinrichtung 40 übermittelbar ist. Alternativ kann auch ein Signal 60 von der Warneinrichtung 40 an die Übermittlungseinrichtung 30 gesendet werden, woraufhin diese die Messwerte der Sensoreinrichtungen 2,3,4,5 und/oder die von dem Mikrofon 10 aufgenommene Geräuschkulisse übermittelt. Der Nutzer der Warneinrichtung 40 kann sich dadurch aktiv selbst ein Bild über den aktuellen Zustand und das Verhalten des Pferdes machen, ohne dass dazu die Übermittlung eines Warnsignals der Übermittlungseinrichtung 30 erforderlich ist. Der Nutzer der Warneinrichtung 40 kann dadurch das Pferd selbst und die das Pferd umgebende Geräuschkulisse aktiv abhören.

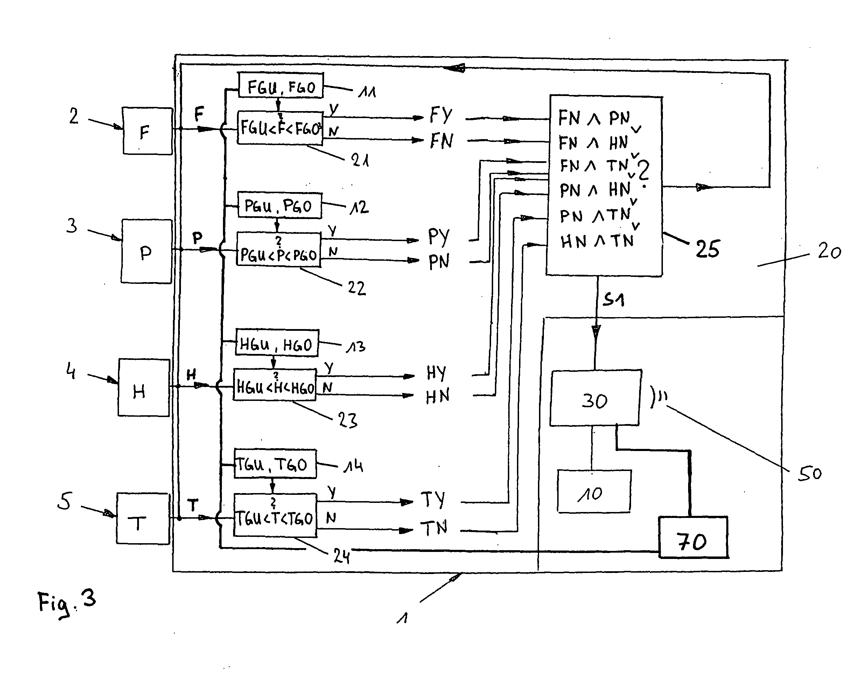

In der Fig.3 ist die Einrichtung 1 mit den Sensoreinrichtungen 2,3,4,5 zu erkennen, deren ermittelten Messwerte der aktuellen Herzfrequenz F, der aktuellen Haltung P, der aktuellen Haut- oder Fellfeuchte H und der aktuellen Körpertemperatur T den Vergleichseinrichtungen 21,22,23,24 zugeführt werden. Ferner werden den Vergleichseinrichtungen 21,22,23,24 aus den Speichereinrichtungen 11,12,13,14 die dort abgelegten oberen und unteren Grenzwerte der Herzfrequenz FGO,FGU, der Haltung PGO,PGU, der Haut- oder Fellfeuchte HGO,HGU und der Körpertemperatur TGO,TGU zugeführt. In den Vergleichseinrichtungen 21,22,23,24 wird eine Abfrage durchgeführt, ob die aktuellen Werte der Herzfrequenz F, der Haltung P, der Haut- oder Fellfeuchte H und der Körpertemperatur T in dem durch die oberen und unteren Grenzwerte FGO,FGU,PGO,PGU,HGO,HGU,TGO,TGU definierten Bereich liegen. Für den Fall, dass einer der aktuellen Messwerte F,P,H,T nicht in dem durch die Grenzwerte definierten Bereich liegt, wird ein entsprechendes Signal FN,PN,HN,TN an eine Auswerteeinrichtung 25 übermittelt. Selbstverständlich wäre es auch möglich, keine unteren Grenzwerte FGU,PGU,HGU,TGU vorzusehen, sofern nur das Überschreiten der oberen Grenzwerte FGO,PGO,HGO,TGO von praktischer Relevanz ist. Für den Fall, dass die aktuellen Messwerte F,P,H,T innerhalb der durch die Grenzwerte FGO,FGU,PGO,PGU,HGO,HGU,TGO,TGU definierten Bereiche liegen, wird jeweils ein Signal FY,PY,HY,TY übermittelt. In der Auswerteeinrichtung 25 werden die übermittelten Signale ausgewertet und bei Vorliegen wenigstens zweier einen Zustand "Messwert außerhalb des definierten Bereiches" indizierender Signale FN,PN,HN,TN ein Ansteuersignal S1 der Übermittlungseinrichtung 30 zugeführt, worauf diese ein Signal 50 zur Aussendung des Warnsignals an die Warneinrichtung 40 sendet. Für den Fall, dass weniger als zwei Messwerte außerhalb der definierten Bereiche liegen, wird der Abfragezyklus erneut gestartet. Die Bedingung des Vorliegens von wenigstens zwei Messwerten außerhalb des durch die oberen und unteren Grenzwerte definierten Bereichs muss keinesfalls so erfüllt werden, dass beide Messwerte die definierten Bereiche gleichzeitig verlassen. Vielmehr ist es möglich, dass das Pferd zunächst eine erhöhte außerhalb des definierten Bereichs liegende Körpertemperatur T aufweist, was für sich noch nicht zu einem Aussenden des Warnsignals führt, dies ist z.B. bei Pferden mit Koliken der Fall, und sich anschließend hinlegt, so dass die die Haltung des Pferdes sensierende Sensoreinrichtung 3 eine außerhalb des durch die oberen und unteren Grenzwerte PGO und PGU definierten Bereichs liegende Haltung sensiert. Damit wird das Warnsignal erst dann abgegeben, wenn das Pferd sich hinlegt, was bei Pferden mit Koliken zu erheblichen Komplikationen und sogar zum Tod des Tieres führen kann.

Ferner ist eine Eingabeeinrichtung 70 vorgesehen, die mit den Speichereinrichtungen 11,12,13,14 verbunden ist, und über die die oberen und/oder unteren Grenzwerte FGO,FGU,PGO,PGU,HGO,HGU,TGO,TGU verändert werden können. Eine solche Veränderung der Grenzwerte ist insbesondere bei einer solchen Einrichtung 1 sinnvoll, welche zur Verwendung durch Fachpersonal, wie z.B. Tierärzte, vorgesehen ist. Der Tierarzt kann die Grenzwerte individuell nach der Konstellation des Pferdes und nach der Pferderasse verändern, wobei auch der momentane Zustand des Pferdes berücksichtigt werden kann.

Alternativ kann die Einrichtung aber kostengünstiger ohne eine Eingabeeinrichtung zur Veränderung der Grenzwerte ausgebildet sein, wobei die unteren Grenzwerte dann entfallen können bzw. auf Null gesetzt werden können und die oberen Grenzwerte FGO,PGO,HGO,TGO als feste Werte gesetzt werden können. Als feste obere Grenzwerte haben sich für die Herzfrequenz 60 Schläge pro Minute, für die Körpertemperatur +40 Grad herausgestellt.

## Patentansprüche

1. Einrichtung (1) zur Überwachung von Großtieren mit
- einer Sensoreinrichtung (2,3,4,5) zur Sensierung der aktuellen Herzfrequenz (F) und/oder der aktuellen Körpertemperatur (T) und/oder der aktuellen Haltung (P) und/oder der aktuellen Haut- oder Fellfeuchte (H),
**dadurch gekennzeichnet, dass**
- eine Speichereinrichtung (11,12,13,14) vorgesehen ist, in der ein vorgegebener oberer Grenzwert der Herzfrequenz (FGO) und/oder der Körpertemperatur (TGO) und/oder der Haltung (PGO) und/oder der Haut- oder Fellfeuchte (HGO) abgelegt sind,
- eine Vergleichseinrichtung (21,22,23,24) vorgesehen ist, in der die aktuelle Herzfrequenz (F) mit dem vorgegebenen oberen Grenzwert der Herzfrequenz (FGO) und/oder die aktuelle Körpertemperatur (T) mit dem vorgegebenen oberen Grenzwert der Körpertemperatur (TGO) und/oder die aktuelle Haltung (P) mit dem vorgegebenen oberen Grenzwert der Haltung (PGO) und/oder die aktuelle Haut- oder Fellfeuchte (H) mit dem vorgegebenen oberen Grenzwert der Haut- oder Fellfeuchte (HGO) verglichen werden,
- und bei Sensierung von wenigstens zwei die oberen Grenzwerte (FGO,HGO,PGO,TGO) überschreitenden Messwerte (F,T,H,P) ein Signal an eine externe Warneinrichtung (40) übermittelbar ist.

2. Einrichtung nach Anspruch 1, **dadurch gekennzeichnet, dass** in der Speichereinrichtung (11,12,13,14) vorgegebene untere Grenzwerte der Herzfrequenz (FGU) und/oder der Körpertemperatur (TGU) und/oder der Haltung (PGU) und/oder der Haut- oder Fellfeuchte (HGU) abgelegt sind, und bei Sensierung von wenigstens zwei Messwerten (F,P,H,T), welche die unteren Grenzwerte (FGU,PGU,HGU,TGU) unterschreiten oder die oberen Grenzwerte (FGO,PGO,HGO,TGO) überschreiten, ein Signal an die externe Warneinrichtung (40) übermittelbar ist.

3. Einrichtung (1) nach einem der vorangegangenen Ansprüche, **dadurch gekennzeichnet, dass** die Einrichtung (1) eine Eingabeeinrichtung (80) zur Eingabe eines der Warneinrichtung (40) zugeordneten Identifikationskennzeichens aufweist.

4. Einrichtung (1) nach einem der vorangegangenen Ansprüche, **dadurch gekennzeichnet, dass** die Einrichtung (1) ein Mikrofon (10) aufweist, und die von dem Mikrofon (10) aufgenommene Geräuschkulisse an die Warneinrichtung (40) übermittelbar ist.

5. Einrichtung (1) nach einem der vorangegangenen Ansprüche, **dadurch gekennzeichnet, dass** die von der Sensoreinrichtung (2,3,4,5) sensierten Messwerte (T,H,P,F) und/oder die von dem Mikrofon (10) aufgenommene Geräuschkulisse aktiv von der Warneinrichtung (40) abrufbar sind.

6. Einrichtung (1) nach einem der vorangegangenen Ansprüche, **dadurch gekennzeichnet, dass** die Warneinrichtung (40) ein Mobiltelefon ist.

7. Einrichtung (1) nach einem der vorangegangenen Ansprüche, **dadurch gekennzeichnet, dass** die Einrichtung (1) eine Eingabeeinrichtung (80) aufweist, über die die vorgegebenen Grenzwerte (FGU,FGO,TGU,TGO,HGU,HGO,PGU,PGO) veränderbar sind.

8. Einrichtung (1) nach einem der vorangegangenen Ansprüche,
**dadurch gekennzeichnet, dass** die Sensoreinrichtung (5) zur Sensierung der aktuellen Körpertemperatur (T) durch eine in dem Körper des Großtieres positionierbare Temperaturmesssonde gebildet ist, und die von der Temperaturmesssonde sensierte aktuelle Körpertemperatur (T) drahtlos an die Einrichtung (1) übermittelbar ist.

9. Einrichtung nach einem der vorangegangenen Ansprüche, **dadurch gekennzeichnet, dass** der vorgegebene obere Grenzwert der Herzfrequenz (FGO) wenigstens 60 Schläge pro Minute beträgt.

10. Einrichtung nach einem der vorangegangenen Ansprüche, **dadurch gekennzeichnet, dass** der vorgegebene obere Grenzwert der Haltung (PGO) +10 Grad und der vorgegebene untere Grenzwert (PGU) -10 Grad Neigung abweichend von der Haltung des stehenden Großtieres beträgt.

11. Einrichtung nach einem der vorangegangenen Ansprüche, **dadurch gekennzeichnet, dass** der vorgegebene obere Grenzwert der Haut- oder Fellfeuchte (HGO) einer relativen Feuchte von 90 % entspricht.

12. Einrichtung nach einem der vorangegangenen Ansprüche, **dadurch gekennzeichnet, dass** der vorgegebene obere Grenzwert der Körpertemperatur (TGO) +40 Grad beträgt.

13. Einrichtung zur Überwachung von Großtieren mit einer Sensoreinrichtung zur Sensierung der aktuellen Körpertemperatur (T) des Großtieres, **dadurch gekennzeichnet, dass** die Sensoreinrichtung (5) durch eine in dem Körper des Großtieres positionierbare Temperaturmesssonde gebildet ist, und eine sich außerhalb des Körpers des Großtieres befindliche Warneinrichtung (40) vorgesehen ist, welche mit der Temperaturmesssonde in drahtloser Signalverbindung steht.

14. Einrichtung nach Anspruch 13, **dadurch gekennzeichnet, dass** der Temperaturmesssonde oder der Warneinrichtung (40) eine Speichereinrichtung (14) zugeordnet ist, in der ein vorgegebener oberer und unterer Grenzwert der Körpertemperatur (TGO,TGU) abgelegt ist, und der Warneinrichtung (40) bei Sensierung einer aktuellen Körpertemperatur (T) außerhalb des durch die Grenzwerte (TGO,TGU) definierten Bereichs ein Warnsignal übermittelbar ist.
